# EUROPÄISCHE PATENTSCHRIFT

(11) **EP 3 928 009 B1**
(45) Veröffentlichungstag und Bekanntmachung des Hinweises auf die Patenterteilung: **10.01.2024**
(21) Anmeldenummer: 20704488.4
(22) Anmeldetag: 05.02.2020
(51) Int. Cl.: G05D 16/20, G05D 16/00, F16K 31/04, F16K 37/00, F16K 11/048, F16K 11/22, G05D 23/13

(54) **MISCHVENTIL FÜR EINE SANITÄRARMATUR UND VERFAHREN ZUR STEUERUNG EINES MISCHVENTILS**
MIXING VALVE FOR A SANITARY FITTING AND METHOD FOR CONTROLLING A MIXING VALVE
CLAPET DE MÉLANGE POUR UNE ROBINETTERIE SANITAIRE ET PROCÉDÉ DE COMMANDE D'UN CLAPET DE MÉLANGE

(30) Priorität: 20.02.2019 DE 102019104228
(43) Veröffentlichungstag der Anmeldung: 29.12.2021
(73) Patentinhaber: Grohe AG, 58653 Hemer (DE)
(72) Erfinder: TUESHAUS, Jan Philipp, 58675 Hemer (DE); BESCHE, Timo, 58452 Witten (DE)
(86) Internationale Anmeldenummer: PCT/EP2020/052903
(87) Internationale Veröffentlichungsnummer: WO 2020/169348

(56) Entgegenhaltungen:
- EP-A1- 0 386 773
- EP-A1- 2 594 832
- EP-A2- 0 320 564
- WO-A1-2018/065842
- WO-A1-2019/026486
- US-A- 2 584 420
- US-A- 4 711 392
- US-A1- 2005 150 965

## Beschreibung

Die vorliegende Erfindung betrifft ein Mischventil für eine Sanitärarmatur und ein Verfahren zur Steuerung eines Mischventils für eine Sanitärarmatur. Sanitärarmaturen dienen insbesondere der bedarfsgerechten Bereitstellung eines Mischwassers an einem Waschbecken, Spülbecken, Badewanne und/oder Dusche.

Sanitärarmaturen weisen hierzu Mischventile auf, die beispielsweise nach Art eines Thermostats ausgebildet sein können. Mit dem Mischventil ist ein Kaltwasser und ein Warmwasser zu dem Mischwasser mit einer gewünschten Mischwassertemperatur mischbar. Zur Einstellung der gewünschten Mischwassertemperatur kann die Sanitärarmatur ein Einstellelement, wie zum Beispiel einen Hebel oder einen Drehknopf, aufweisen. Weiterhin sind elektrisch angetriebene Mischventile bekannt, bei denen die Mischwassertemperatur elektronisch steuerbar ist. Hierzu können die elektrisch angetriebenen Mischventile einen Antrieb für ein Verstellelement für das Warmwasser und Kaltwasser aufweisen, beispielsweise bekannt geworden aus EP 0 386 773 A1 und WO 2018/065842 A1. Solche Mischventile neigen jedoch bei Druckungleichgewichten zwischen dem zuströmenden Kaltwasser und Warmwasser zu einem starken Schwingungsverhalten, bei dem die tatsächliche Mischwassertemperatur um die gewünschte Mischwassertemperatur schwingt. Zudem sind elektrisch angetriebene Mischventile bekannt, die für das Kaltwasser und Warmwasser zwei getrennte Verstellelemente aufweisen. Diese erfordern für eine ausreichend genaue bzw. schnelle Regelung der Mischwassertemperatur eine Vielzahl von Sensoren, was zu einem hohen Montageaufwand und hohen Kosten führt.

Aufgabe der Erfindung ist es daher, die mit Bezug auf den Stand der Technik geschilderten Probleme zumindest teilweise zu lösen und insbesondere ein Mischventil für eine Sanitärarmatur anzugeben, mit dem ein Mischwasser mit einer gewünschten Mischwassertemperatur zuverlässig mischbar ist, und das mit einem geringen Montageaufwand hergestellt werden kann. Zudem soll ein Verfahren zur Steuerung eines Mischventils angegeben werden, mit dem das Mischwasser mit einer gewünschten Mischwassertemperatur zuverlässig mischbar ist.

Diese Aufgaben werden gelöst mit einem Mischventil und einem Verfahren gemäß den Merkmalen der unabhängigen Patentansprüche. Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Mischventil für eine Sanitärarmatur bei, das zumindest die folgenden Komponenten aufweist:
- ein Ventilgehäuse mit einem Kaltwasserzulauf für Kaltwasser, einem Warmwasserzulauf für Warmwasser, einer Mischkammer und einem Mischwasserablauf,
- ein Mischwasserventil zum Mischen des Kaltwassers und des Warmwassers zu einem Mischwasser,
- zumindest ein Drucksensor, mittels dem eine Differenz zwischen einem Kaltwasserdruck in dem Kaltwasserzulauf und einem Warmwasserdruck in dem Warmwasserzulauf bestimmbar ist,
- zumindest ein Druckausgleichventil in dem Kaltwasserzulauf und dem Warmwasserzulauf und
- zumindest ein erster Antrieb, mit dem das zumindest eine Druckausgleichventil derart betätigbar ist, so dass der Kaltwasserdruck und der Warmwasserdruck stromabwärts des zumindest einen Druckausgleichventils zumindest teilweise angleichbar ist.

Das Mischventil ist insbesondere nach Art eines Thermostatventils ausgebildet und/oder kann beispielsweise in einem Armaturengehäuse einer Sanitärarmatur angeordnet werden. Eine solche Sanitärarmatur dient insbesondere der bedarfsgerechten Bereitstellung eines Mischwassers mit einer gewünschten Mischwassertemperatur an einem Waschbecken, Spülbecken, Dusche und/oder Badewanne.

Das Mischventil weist ein Ventilgehäuse mit einem Kaltwasserzulauf für Kaltwasser mit einer Kaltwassertemperatur, einem Warmwasserzulauf für Warmwasser mit einer Warmwassertemperatur, einer Mischkammer und einem Mischwasserablauf für Mischwasser auf. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Ventilgehäuse kann zumindest teilweise aus Kunststoff und/oder Metall, wie zum Beispiel Messing bestehen. Bei dem Kaltwasserzulauf und dem Warmwasserzulauf handelt es sich insbesondere um Kanäle in dem Ventilgehäuse, die in die Mischkammer münden und/oder über die das Kaltwasser und das Warmwasser zu der Mischkammer in dem Ventilgehäuse zuführbar ist. Das Kaltwasser ist dem Kaltwasserzulauf insbesondere über eine Kaltwasserzuleitung und das Warmwasser dem Warmwasserzulauf über eine Warmwasserzuleitung zuführbar. Hierzu ist die Kaltwasserleitung mit dem Kaltwasserzulauf und die Warmwasserleitung mit dem Warmwasserzulauf insbesondere lösbar, beispielsweise über entsprechende Gewinde, verbindbar. Bei dem Mischwasserablauf handelt es sich insbesondere um einen Kanal in dem Ventilgehäuse, über das das Mischwasser aus der Mischkammer abfließen kann. Über den Mischwasserablauf ist das Mischwasser insbesondere einem Auslauf der Sanitärarmatur zuführbar.

Zum Mischen des Kaltwassers und des Warmwassers zu dem Mischwasser weist das Mischventil zudem ein Mischwasserventil auf, das insbesondere in der Mischkammer des Ventilgehäuses angeordnet ist. Mittels des Mischwasserventils ist ein Mischungsverhältnis zwischen dem Kaltwasser und dem Warmwasser einstellbar, sodass in der Mischkammer das Mischwasser mit der gewünschten Mischwassertemperatur entsteht.

Weiterhin weist das Mischventil zumindest einen Drucksensor auf, mittels dem eine Differenz zwischen einem Kaltwasserdruck in dem Kaltwasserzulauf und einem Warmwasserdruck in dem Warmwasserzulauf bestimmbar ist. Mit anderen Worten kann mit dem zumindest einen Drucksensor bestimmt werden, ob das Kaltwasser in dem Kaltwasserzulauf und das Warmwasser in dem Warmwasserzulauf unterschiedliche Drücke aufweisen. Mittels des zumindest einen Drucksensors ist die Differenz zwischen dem Kaltwasserdruck und dem Warmwasserdruck insbesondere kontinuierlich bestimmbar.

Weiterhin weist das Mischventil zumindest ein Druckausgleichventil in dem Kaltwasserzulauf und dem Warmwasserzulauf auf. Mittels des zumindest einen Druckausgleichventils ist der Kaltwasserzulauf und/oder der Warmwasserzulauf insbesondere zumindest teilweise verschließbar.

Das zumindest eine Druckausgleichventil ist mit zumindest einem Antrieb betätigbar, bei dem es sich insbesondere um einen Elektroantrieb, beispielsweise nach Art eines Linearantriebs, handelt. Die Betätigung des zumindest einen Druckausgleichventils erfolgt derart, dass der Kaltwasserdruck und der Warmwasserdruck stromabwärts, d. h. in Strömungsrichtung des Kaltwassers und/oder des Warmwassers hinter dem zumindest einem Druckausgleichventil, zumindest teilweise angleichbar ist. Dies bedeutet mit anderen Worten, dass die Betätigung des zumindest einen Druckausgleichventils derart erfolgt, dass ein Druckunterschied zwischen dem Kaltwasser und dem Warmwasser zumindest teilweise oder sogar vollständig ausgeglichen wird. Das Kaltwasser und das Warmwasser können dem Mischwasserventil hierdurch auch bei stark unterschiedlichen Eingangsdrücken mit (im Wesentlichen) gleichem Druck zugeführt werden, sodass die Mischwassertemperatur des Mischwassers mit einer höheren Präzision einstellbar ist. Die Betätigung des zumindest einen Druckausgleichventils kann beispielsweise mittels einer Steuerung erfolgen, die zumindest einen Mikroprozessor aufweisen kann. Die Steuerung kann zudem datenleitend mit dem zumindest einen Drucksensor verbunden sein, um das zumindest eine Druckausgleichventil in Abhängigkeit von der Differenz zwischen dem Kaltwasserdruck in dem Kaltwasserzulauf und dem Warmwasserdruck in dem Warmwasserzulauf derart zu betätigen, dass der Kaltwasserdruck und der Warmwasserdruck stromabwärts des zumindest einen Druckausgleichventils zumindest teilweise angeglichen ist.

Zudem weist das zumindest eine Druckausgleichventil einen ersten Schieber auf, mittels dem der Kaltwasserzulauf und der Warmwasserzulauf zumindest teilweise verschließbar sind. Bei dem ersten Schieber handelt es sich um ein Ventilelement, das sich zumindest teilweise sowohl in den Kaltwasserzulauf als auch in den Warmwasserzulauf erstreckt. Der Kaltwasserdruck und der Warmwasserdruck können dadurch durch einen einzigen Antrieb eingestellt werden. Mittels des Antriebs ist der erste Schieber insbesondere in eine Schieberichtung verstellbar, die beispielsweise orthogonal zu einer Strömungsrichtung des Kaltwassers in dem Kaltwasserzulauf und/oder einer Strömungsrichtung des Warmwassers in dem Warmwasserzulauf verläuft.

Weiterhin weist der erste Schieber im Bereich des Kaltwasserzulaufs einen ersten keilförmigen Abschnitt und im Bereich des Warmwasserzulaufs einen zweiten keilförmigen Abschnitt auf. Der erste keilförmige Abschnitt und der zweite keilförmige Abschnitt befinden sich insbesondere an einem längsseitigen Ende des ersten Schiebers. Keilförmig bedeutet in diesem Zusammenhang insbesondere, dass der erste Abschnitt und der zweite Abschnitt (im Wesentlichen) dreieckförmig sind. Weiterhin vergrößert sich insbesondere ein Durchmesser des ersten Schiebers im Bereich des Kaltwasserzulaufs und des Warmwasserzulaufs in Richtung der längsseitigen Enden des ersten Schiebers.

Darüber hinaus können der erste keilförmige Abschnitt und der zweite keilförmige Abschnitt spiegelsymmetrisch zueinander ausgebildet sein.

Des Weiteren weisen der erste keilförmige Abschnitt eine erste Nase und der zweite keilförmige Abschnitt eine zweite Nase auf, wobei die erste Nase zumindest teilweise in den Kaltwasserzulauf und die zweite Nase zumindest teilweise in den Warmwasserzulauf ragt. Die erste Nase erstreckt sich insbesondere von einer schräg zu der Schieberichtung des ersten Schiebers verlaufenden Fläche des ersten keilförmigen Abschnitts in Richtung des Kaltwasserzulaufs und die zweite Nase insbesondere von einer schräg zu der Schieberichtung des ersten Schiebers verlaufenden Fläche des zweiten keilförmigen Abschnitts in Richtung des Warmwasserzulaufs. Weiterhin können die erste Nase und die zweite Nase ebenfalls dreieckförmig ausgebildet sein. Eine Fläche der ersten Nase kann zudem orthogonal zu der Strömungsrichtung des in dem Kaltwasserzulauf zuströmenden Kaltwassers und eine Fläche der zweiten Nase orthogonal zu der Strömungsrichtung des in dem Warmwasserzulauf zuströmenden Warmwassers verlaufen.

Zudem können der erste keilförmige Abschnitt und der zweite keilförmige Abschnitt über eine erste Achse verbunden sein. Insbesondere sind der erste keilförmige Abschnitt und der zweite keilförmige Abschnitt in der Schieberichtung des ersten Schiebers starr miteinander verbunden. Weiterhin kann der zumindest eine Drucksensor als Differenzdrucksensor ausgebildet sein. Bei dem Differenzdrucksensor handelt es sich um einen Drucksensor, mit dem die Differenz zwischen dem Kaltwasserdruck in dem Kaltwasserzulauf und dem Warmwasserdruck in dem Warmwasserzulauf bestimmbar ist. Der Differenzdrucksensor kann zwei Messkammern umfassen, von denen jeweils eine fluidleitend mit dem Kaltwasserzulauf und dem Warmwasserzulauf verbunden ist. Die beiden Messkammern können durch eine Membran voneinander getrennt sein, wobei eine Auslenkung der Membran als Maß für die Größe des Differenzdruckes dienen kann. Darüber hinaus kann der Kaltwasserzulauf, der Warmwasserzulauf oder der Mischwasserablauf einen Temperatursensor aufweisen. Die Temperatursensoren können ebenfalls datenleitend mit der Steuerung verbunden sein. Durch die Temperatursensoren des Kaltwasserzulaufs und des Warmwasserzulaufs kann mithilfe einer Ventilkennlinie und einer Mischungsformel eine Reaktionszeit des Mischwasserventils reduziert werden.

Des Weiteren kann das Mischwasserventil einen zweiten Schieber aufweisen, mittels dem eine Mischwassertemperatur des Mischwassers steuerbar ist. Der zweite Schieber ist insbesondere identisch zu dem ersten Schieber ausgebildet, sodass die in Bezug auf den ersten Schieber beschriebenen Eigenschaften in entsprechender Weise auf den zweiten Schieber übertragen werden können.

Einem weiteren Aspekt der Erfindung folgend wird auch ein Verfahren zur Steuerung eines Mischventils mit einem Kaltwasserzulauf, einem Warmwasserzulauf und einem Mischwasserablauf angegeben, das zumindest die folgenden Schritte aufweist:
a) Bestimmen einer Differenz zwischen einem Kaltwasserdruck in dem Kaltwasserzulauf und einem Warmwasserdruck in dem Warmwasserzulauf,
b) Angleichen des Kaltwasserdrucks und des Warmwasserdrucks mit zumindest einem Druckausgleichventil in dem Kaltwasserzulauf und dem Warmwasserzulauf, wobei das zumindest eine Druckausgleichventil einen ersten Schieber aufweist, mittels dem der Kaltwasserzulauf und der Warmwasserzulauf zumindest teilweise verschließbar sind, wobei der erste Schieber im Bereich des Kaltwasserzulaufs einen ersten keilförmigen Abschnitt und im Bereich des Warmwasserzulaufs einen zweiten keilförmigen Abschnitt aufweist, wobei der erste keilförmige Abschnitt eine erste Nase und der zweite keilförmige Abschnitt eine zweite Nase aufweist, wobei die erste Nase zumindest teilweise in den Kaltwasserzulauf und die zweite Nase zumindest teilweise in den Warmwasserzulauf ragt
c) Mischen des Kaltwassers und des Warmwassers zu einem Mischwasser, wobei eine Mischwassertemperatur des Mischwassers mit einem Mischwasserventil eingestellt wird.

Das Verfahren wird insbesondere mit einem erfindungsgemäßen Mischventil durchgeführt. Für weitere Einzelheiten wird daher auf die Beschreibung des Mischventils verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Mischventil;
- Fig. 2:: ein Druckausgleichventil und ein Mischwasserventil des Mischventils;
- Fig. 3:: das Druckausgleichventil in einer ersten Betriebsstellung; und
- Fig. 4:: das Druckausgleichventil in einer zweiten Betriebsstellung.

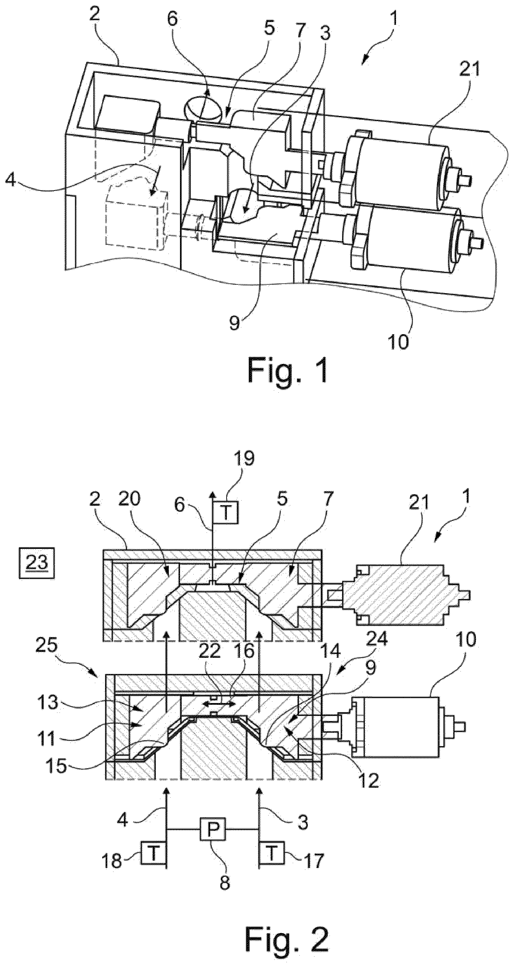

Die Fig. 1 zeigt ein Mischventil 1 in einer perspektivischen Schnittdarstellung. Das Mischventil 1 weist ein Ventilgehäuse 2 mit einem Kaltwasserzulauf 3 für Kaltwasser, einen Warmwasserzulauf 4 für Warmwasser, eine Mischkammer 5 und einen Mischwasserablauf 6 auf. In dem Kaltwasserzulauf 3 und dem Warmwasserzulauf 4 ist ein Druckausgleichventil 9 angeordnet, das durch einen ersten Antrieb 10 betätigbar ist. Der Kaltwasserzulauf 3 und der Warmwasserzulauf 4 führen stromabwärts des Druckausgleichventils 9 zu einem Mischwasserventil 7, das in der Mischkammer 5 angeordnet ist. Das Mischwasserventil 7 ist durch einen zweiten Antrieb 21, bei dem es sich ebenfalls um einen Elektroantrieb nach Art eines Linearantriebs handelt, betätigbar.

Die Fig. 2 zeigt das Druckausgleichventil 9 und das Mischwasserventil 7 des Mischventils 1 in einer Schnittdarstellung. Der Kaltwasserzulauf 3 weist einen ersten Temperatursensor 17 und der Warmwasserzulauf 4 einen zweiten Temperatursensor 18 auf. Weiterhin weist der Kaltwasserzulauf 3 und der Warmwasserzulauf 4 einen gemeinsamen Drucksensor 8 auf, der nach Art eines Differenzdrucksensors ausgebildet ist. Mittels des Drucksensors 8 ist eine Differenz zwischen einem Kaltwasserdruck in dem Kaltwasserzulauf 3 und einem Warmwasserdruck in dem Warmwasserzulauf 4 bestimmbar.

Das Druckausgleichventil 9 umfasst einen ersten Schieber 11 mit einem ersten keilförmigen Abschnitt 12 an einem ersten längsseitigen Ende 24 des ersten Schiebers 11 im Bereich des Kaltwasserzulaufs 3 und einen zweiten keilförmigen Abschnitt 13 an einen zweiten längsseitigen Ende 25 des ersten Schiebers 11 im Bereich des Warmwasserzulaufs 4. Der erste keilförmige Abschnitt 12 und der zweite keilförmige Abschnitt 13 sind spiegelsymmetrisch zueinander angeordnet und über eine erste Achse 16 verbunden, sodass der erste keilförmige Abschnitt 12 und der zweite keilförmige Abschnitt 13 gemeinsam mittels des ersten Antriebs 10 in eine Schieberichtung 22 verstellbar sind. Weiterhin weist der erste keilförmige Abschnitt 12 eine erste Nase 14, die sich in Richtung des Kaltwasserzulaufs 3 erstreckt, und der zweite keilförmige Abschnitt 13 eine zweite Nase 15 auf, die sich in Richtung des Warmwasserzulaufs 4 erstreckt. Das Druckausgleichventil 9 ist mit dem ersten Antrieb 10 derart betätigbar, dass der Kaltwasserdruck und der Warmwasserdruck stromabwärts des Druckausgleichventils 9 zumindest teilweise angleichbar ist. Hierzu sind der Drucksensor 8, der erste Temperatursensor 17, der zweite Temperatursensor 18 und der Antrieb 10 datenleitend mit einer Steuerung 23 verbunden, durch die der Antrieb 10 steuerbar ist.

Das Mischwasserventil 7 weist einen zweiten Schieber 20 auf, der identisch zu dem ersten Schieber 11 ausgebildet ist. Sämtliche Eigenschaften des ersten Schiebers 11 sind daher entsprechend auf den zweiten Schieber 20 übertragbar. Der zweite Schieber 20 ist mittels eines zweiten Antriebs 21 in der Schieberichtung 22 verstellbar, wobei der Antrieb 21 ebenfalls durch die Steuerung 23 steuerbar ist. Abweichend zu der Darstellung in der Fig. 2 ist der zweite Schieber 20 um 90° um seine Längsachse (die parallel zu der Schieberichtung 22 verläuft) verdreht zu dem ersten Schieber 11 angeordnet (vgl. Fig. 1). Der Kaltwasserzulauf 3 und der Warmwasserzulauf 4 münden im Bereich des Mischwasserventils 7 in die Mischkammer 5. Das durch das Mischwasserventil 7 gemischte Mischwasser kann von der Mischkammer 5 über den Mischwasserablauf 6 ablaufen. Der Mischwasserablauf 6 weist einen dritten Temperatursensor 19 auf, der ebenfalls datenleitend mit der Steuerung 23 verbunden ist.

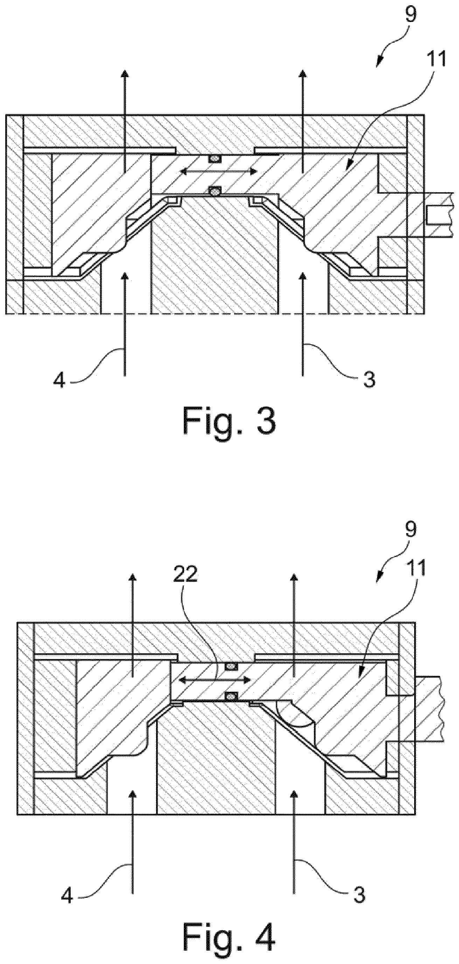

Die Fig. 3 zeigt das Druckausgleichventil 9 in einer ersten Betriebsstellung, bei der der Kaltwasserdruck in dem Kaltwasserzulauf 3 und der Warmwasserdruck in dem Warmwasserzulauf 4 identisch sind. In diesem Fall wird das Druckausgleichventil 9 durch den in der Fig. 2 gezeigten ersten Antrieb 10 derart betätigt, dass sich der erste Schieber 11 in einer Mittelposition befindet. In der Mittelposition des ersten Schiebers 11 kann durch den Kaltwasserzulauf 3 die gleiche Menge Kaltwasser strömen, wie Warmwasser durch den Warmwasserzulauf 4.

Die Fig. 4 zeigt das Druckausgleichventil 9 in einer zweiten Betriebsstellung, bei dem der Warmwasserdruck in dem Warmwasserzulauf 4 größer ist als der Kaltwasserdruck in dem Kaltwasserzulauf 3. In diesem Fall wird das Druckausgleichventil 9 durch den in der Fig. 2 gezeigten ersten Antrieb 10 in der Schieberichtung 22 nach rechts verstellt, sodass der Warmwasserzulauf 4 weiter geschlossen und der Kaltwasserzulauf 3 weiter geöffnet ist. Hierdurch wird der Strömungswiderstand in dem Warmwasserzulauf 4 erhöht und der Strömungswiderstand in dem Kaltwasserzulauf 3 reduziert, sodass eine Angleichung des Kaltwasserdrucks und des Warmwasserdrucks stromabwärts des Druckausgleichventils 9 erfolgt.

Durch die vorliegende Erfindung ist ein Mischwasser mit einer gewünschten Mischwassertemperatur zuverlässig mit einem Mischventil mischbar und das Mischventil mit geringem Montageaufwand herstellbar.

### Bezugszeichenliste

- 1: Mischventil
- 2: Ventilgehäuse
- 3: Kaltwasserzulauf
- 4: Warmwasserzulauf
- 5: Mischkammer
- 6: Mischwasserablauf
- 7: Mischwasserventil
- 8: Drucksensor
- 9: Druckausgleichventil
- 10: erster Antrieb
- 11: erster Schieber
- 12: erster keilförmiger Abschnitt
- 13: zweiter keilförmiger Abschnitt
- 14: erste Nase
- 15: zweite Nase
- 16: erste Achse
- 17: erster Temperatursensor
- 18: zweiter Temperatursensor
- 19: dritter Temperatursensor
- 20: zweiter Schieber
- 21: zweiter Antrieb
- 22: Schieberichtung
- 23: Steuerung
- 24: erstes längsseitiges Ende
- 25: zweites längsseitiges Ende

## Patentansprüche

1. Mischventil (1) für eine Sanitärarmatur, aufweisend:
- ein Ventilgehäuse (2) mit einem Kaltwasserzulauf (3) für Kaltwasser, einem Warmwasserzulauf (4) für Warmwasser, einer Mischkammer (5) und einem Mischwasserablauf (6),
- ein Mischwasserventil (7) zum Mischen des Kaltwassers und des Warmwassers zu einem Mischwasser,
- zumindest ein Drucksensor (8), mittels dem eine Differenz zwischen einem Kaltwasserdruck in dem Kaltwasserzulauf (3) und einem Warmwasserdruck in dem Warmwasserzulauf (4) bestimmbar ist,
- zumindest ein Druckausgleichventil (9) in dem Kaltwasserzulauf (3) und dem Warmwasserzulauf (4), wobei das zumindest eine Druckausgleichventil (9) einen ersten Schieber (11) aufweist, mittels dem der Kaltwasserzulauf (3) und der Warmwasserzulauf (4) zumindest teilweise verschließbar sind, wobei der erste Schieber (11) im Bereich des Kaltwasserzulaufs (3) einen ersten keilförmigen Abschnitt (12) und im Bereich des Warmwasserzulaufs (4) einen zweiten keilförmigen Abschnitt (13) aufweist,
- zumindest ein erster Antrieb (10), mit dem das zumindest eine Druckausgleichventil (9) derart betätigbar ist, so dass der Kaltwasserdruck und der Warmwasserdruck stromabwärts des zumindest einen Druckausgleichventils (9) zumindest teilweise angleichbar ist, **dadurch gekennzeichnet, dass** der erste keilförmige Abschnitt (12) eine erste Nase (14) und der zweite keilförmige Abschnitt (13) eine zweite Nase (15) aufweist, wobei die erste Nase (14) zumindest teilweise in den Kaltwasserzulauf (3) und die zweite Nase (15) zumindest teilweise in den Warmwasserzulauf (4) ragt.

2. Mischventil (1) nach Patentanspruch 1, wobei der erste keilförmige Abschnitt (12) und der zweite keilförmige Abschnitt (13) spiegelsymmetrisch zueinander ausgebildet sind.

3. Mischventil (1) nach einem der Patentansprüche 1 bis 2, wobei der erste keilförmige Abschnitt (12) und der zweite keilförmige Abschnitt (13) über eine erste Achse (16) verbunden sind.

4. Mischventil (1) nach einem der vorherigen Patentansprüche, wobei der zumindest eine Drucksensor (8) als Differenzdrucksensor ausgebildet ist.

5. Mischventil (1) nach einem der vorherigen Patentansprüche, wobei der Kaltwasserzulauf (3), der Warmwasserzulauf (4) oder der Mischwasserablauf (6) einen Temperatursensor (17, 18, 19) aufweist.

6. Mischventil (1) nach einem der vorherigen Patentansprüche, wobei das Mischwasserventil (7) einen zweiten Schieber (20) aufweist, mittels dem eine Mischwassertemperatur des Mischwassers steuerbar ist.

7. Verfahren zur Steuerung eines Mischventils (1) mit einem Kaltwasserzulauf (3), einem Warmwasserzulauf (4) und einem Mischwasserablauf (6), aufweisend zumindest die folgenden Schritte:
a) Bestimmen einer Differenz zwischen einem Kaltwasserdruck in dem Kaltwasserzulauf (3) und einem Warmwasserdruck in dem Warmwasserzulauf (4),
b) Angleichen des Kaltwasserdrucks und des Warmwasserdrucks mit zumindest einem Druckausgleichventil (9) in dem Kaltwasserzulauf (3) und dem Warmwasserzulauf (4), wobei das zumindest eine Druckausgleichventil (9) einen ersten Schieber (11) aufweist, mittels dem der Kaltwasserzulauf (3) und der Warmwasserzulauf (4) zumindest teilweise verschließbar sind, wobei der erste Schieber (11) im Bereich des Kaltwasserzulaufs (3) einen ersten keilförmigen Abschnitt (12) und im Bereich des Warmwasserzulaufs (4) einen zweiten keilförmigen Abschnitt (13) aufweist, wobei der erste keilförmige Abschnitt (12) eine erste Nase (14) und der zweite keilförmige Abschnitt (13) eine zweite Nase (15) aufweist, wobei die erste Nase (14) zumindest teilweise in den Kaltwasserzulauf (3) und die zweite Nase (15) zumindest teilweise in den Warmwasserzulauf (4) ragt
c) Mischen des Kaltwassers und des Warmwassers zu einem Mischwasser, wobei eine Mischwassertemperatur des Mischwassers mit einem Mischwasserventil (7) eingestellt wird.

## Claims

1. A mixing valve (1) for a sanitary fitting, comprising:
- a valve housing (2) having a cold water feed (3) for cold water, a hot water feed (4) for hot water, a mixing chamber (5) and a mixed water discharge (6),
- a mixed water valve (7) for mixing the cold water and the hot water to form mixed water,
- at least one pressure sensor (8) by means of which a difference between a cold water pressure in the cold water feed (3) and a hot water pressure in the hot water feed (4) can be determined,
- at least one pressure equalization valve (9) in the cold water feed (3) and the hot water feed (4), wherein the at least one pressure equalization valve (9) has a first slide valve (11) by means of which the cold water feed (3) and the hot water feed (4) can be at least partially closed, wherein the first slide valve (11) has a first wedge-shaped portion (12) in the region of the cold water feed (3) and a second wedge-shaped portion (13) in the region of the hot water feed (4),
- at least one first drive (10) by means of which the at least one pressure equalization valve (9) can be actuated in such a manner that the cold water pressure and the hot water pressure downstream of the at least one pressure equalization valve (9) can be at least partially adjusted, **characterized in that** the first wedge-shaped portion (12) has a first nose (14) and the second wedge-shaped section (13) has a second nose (15), wherein the first nose (14) projects at least partially into the cold water feed (3) and the second nose (15) projects at least partially into the hot water feed (4).

2. The mixing valve (1) according to claim 1, wherein the first wedge-shaped portion (12) and the second wedge-shaped portion (13) are formed mirror-symmetrically to each other.

3. The mixing valve (1) according to any one of claims 1 to 2, wherein the first wedge-shaped portion (12) and the second wedge-shaped portion (13) are connected via a first axis (16).

4. The mixing valve (1) according to any one of the preceding claims, wherein the at least one pressure sensor (8) is designed as a differential pressure sensor.

5. The mixing valve (1) according to any one of the preceding claims, wherein the cold water feed (3), the hot water feed (4) or the mixed water discharge (6) has a temperature sensor (17, 18, 19).

6. The mixing valve (1) according to any one of the preceding claims, wherein the mixed water valve (7) has a second slide valve (20) by means of which a mixed water temperature of the mixed water can be controlled.

7. A method for controlling a mixing valve (1) having a cold water feed (3), a hot water feed (4) and a mixed water discharge (6), comprising at least the following steps:
a) determining a difference between a cold water pressure in the cold water feed (3) and a hot water pressure in the hot water feed (4),
b) adjusting the cold water pressure and the hot water pressure with at least one pressure equalization valve (9) in the cold water feed (3) and the hot water feed (4), wherein the at least one pressure equalization valve (9) has a first slide valve (11) by means of which the cold water feed (3) and the hot water feed (4) can be at least partially closed, wherein the first slide valve (11) has a first wedge-shaped portion (12) in the region of the cold water feed (3) and a second wedge-shaped portion (13) in the region of the hot water feed (4), wherein the first wedge-shaped portion (12) has a first nose (14) and the second wedge-shaped section (13) has a second nose (15), wherein the first nose (14) projects at least partially into the cold water feed (3) and the second lug (15) projects at least partially into the hot water feed (4),
c) mixing the cold water and the hot water to form mixed water, wherein a mixed water temperature of the mixed water is set with a mixed water valve (7).

## Revendications

1. Vanne mélangeuse (1) destinée à une robinetterie sanitaire, comportant :
- un corps de vanne (2) pourvu d'une arrivée (3) d'eau froide pour de l'eau froide, d'une arrivée (4) d'eau chaude pour de l'eau chaude, d'une chambre de mélange (5) et d'une évacuation (6) d'eau mitigée,
- un mitigeur d'eau (7), destiné à mélanger l'eau froide et l'eau chaude en une eau mitigée,
- au moins un capteur de pression (8), au moyen duquel une différence entre une pression d'eau froide dans l'arrivée (3) d'eau froide et une pression d'eau chaude dans l'arrivée (4) d'eau chaude peut être déterminée,
- au moins une vanne de régulation de pression (9) dans l'arrivée (3) d'eau froide et dans l'arrivée (4) d'eau chaude, l'au moins une vanne de régulation de pression (9) comportant un premier curseur (11), au moyen duquel l'arrivée (3) d'eau froide et l'arrivée (4) d'eau chaude peuvent se fermer au moins partiellement, le premier curseur (11) comportant dans la zone de l'arrivée (3) d'eau froide un premier segment (12) cunéiforme et dans la zone de l'arrivée (4) d'eau chaude un deuxième segment (13) cunéiforme,
- au moins un premier entraînement (10), à l'aide duquel l'au moins une vanne de régulation de pression (9) est susceptible d'être actionnée de telle sorte, que la pression d'eau froide et la pression d'eau chaude soient ajustables au moins partiellement en aval de l'au moins une vanne de régulation de pression (9), **caractérisée en ce que** le premier segment (12) cunéiforme comporte un premier bec (14) et le deuxième segment (13) cunéiforme comporte un deuxième bec (15), le premier bec (14) saillant au moins partiellement dans l'arrivée (3) d'eau froide et le deuxième bec (15) saillant au moins partiellement dans l'arrivée (4) d'eau chaude.

2. Vanne mélangeuse (1) selon la revendication 1 du brevet, le premier segment (12) cunéiforme et le deuxième segment (13) cunéiforme étant conçus en symétrie spéculaire réciproque.

3. Vanne mélangeuse (1) selon l'une quelconque des revendications 1 à 2 du brevet, le premier segment (12) cunéiforme et le deuxième segment (13) cunéiforme étant reliés par l'intermédiaire d'un premier axe (16).

4. Vanne mélangeuse (1) selon l'une quelconque des revendications précédentes du brevet, l'au moins un capteur de pression (8) étant conçu sous la forme d'un capteur de pression différentielle.

5. Vanne mélangeuse (1) selon l'une quelconque des revendications précédentes du brevet, l'arrivée (3) d'eau froide, l'arrivée (4) d'eau chaude ou l'évacuation (6) d'eau mitigée comportant un capteur de température (17, 18, 19).

6. Vanne mélangeuse (1) selon l'une quelconque des revendications précédentes du brevet, le mitigeur d'eau (7) comportant un deuxième curseur (20), au moyen duquel une température d'eau mitigée de l'eau mitigée est susceptible d'être commandée.

7. Procédé, destiné à commander une vanne mélangeuse (1) pourvue d'une arrivée (3) d'eau froide, d'une arrivée (4) d'eau chaude et d'une évacuation (6) d'eau mitigée, comportant au moins les étapes suivantes, consistant à :
a) déterminer une différence entre une pression d'eau froide dans l'arrivée (3) d'eau froide et une pression d'eau chaude dans l'arrivée (4) d'eau chaude,
b) ajuster la pression d'eau froide et la pression d'eau chaude à l'aide d'au moins une vanne de régulation de pression (9) dans l'arrivée (3) d'eau froide et dans l'arrivée (4) d'eau chaude, l'au moins une vanne de régulation de pression (9) comportant un premier curseur (11), au moyen duquel l'arrivée (3) d'eau froide et l'arrivée (4) d'eau chaude peuvent se fermer au moins partiellement, le premier curseur (11) comportant dans la zone de l'arrivée (3) d'eau froide un premier segment (12) cunéiforme et dans la zone de l'arrivée (4) d'eau chaude un deuxième segment (13) cunéiforme, le premier segment (12) cunéiforme comportant un premier bec (14) et le deuxième segment (13) cunéiforme comportant un deuxième bec (15), le premier bec (14) saillant au moins partiellement dans l'arrivée (3) d'eau froide et le deuxième bec (15) saillant au moins partiellement dans l'arrivée (4) d'eau chaude,
c) mélanger l'eau froide et l'eau chaude en une eau mitigée, la température d'eau mitigée de l'eau mitigée étant réglée à l'aide d'un mitigeur d'eau (7).
